## Europäisches Patentamt
## European Patent Office
## Office européen des brevets

(19)

(11) Veröffentlichungsnummer: **0 144 994**

**A2**

(12) # EUROPÄISCHE PATENTANMELDUNG

(21) Anmeldenummer: **84114940.4**

(22) Anmeldetag: **07.12.84**

(51) Int. Cl.⁴: **A 01 M 1/02**

(30) Priorität: **09.12.83 DE 8335273 U**

(43) Veröffentlichungstag der Anmeldung:
**19.06.85 Patentblatt 85/25**

(84) Benannte Vertragsstaaten:
**AT BE CH DE FR IT LI**

(71) Anmelder: **Röchling Haren KG**

**D-4472 Haren Ems 1(DE)**

(72) Erfinder: **Pinkernell, Heinrich**
**Kreuzstrasse 21**
**D-4474 Lathen(DE)**

(74) Vertreter: **Busse & Busse Patentanwälte**
**Postfach 1226 Grosshandelsring 6**
**D-4500 Osnabrück(DE)**

(54) **Lockstoff-Falle für fliegende Forstschädlinge, insbesondere Borkenkäfer.**

(57) Eine Lockstoff-Falle für fliegende Forstschädlinge, insbesondere Borkenkäfer, besteht aus einer in aufrechter Stellung angeordneten Flugbarriere in Form eines starren Plattenkörpers und einem unter diesem angeordneten flaschenförmigen Auffangbehälter (13) für nach Aufprallen auf dem Plattenkörper abstürzende Schädlinge. Der Plattenkörper ist als Flachtrichter (1) mit einem sich zum Auffangbehälter (13) hin verjüngenden, in dessen oberseitige Öffnung (18) einmündenden unteren Endbereich (6) ausgebildet. Die Breitseiten (7) des Flachtrichters (1) sind mit sich über ihre gesamte Breite erstreckenden, ununterbrochenen Wandschlitzen (10) versehen, die unterseitig von schräg nach außen und oben abgewinkelten, ihrerseits ununterbrochenen Leit- und Fanglaschen (11) begrenzt sind. Die Falle ermöglicht bei leichter Bedienung hohe Fangquoten.

Fig. 1

EP 0 144 994 A2

L/Hä

Lockstoff-Falle für fliegende
Forstschädlinge, insbesondere Borkenkäfer

Die Erfindung betrifft eine Lockstoff-Falle für fliegende
Forstschädlinge, insbesondere Borkenkäfer, bestehend aus
einer in aufrechter Stellung angeordneten Flugbarriere in
Form eines starren Plattenkörpers für anfliegende Schädlinge und einem unter diesem angeordneten, eine oberseitige
Öffnung aufweisenden Auffangbehälter für nach Aufprallen
auf den Plattenkörper abstürzende Schädlinge.

Der Erfindung liegt die Aufgabe zugrunde, eine Lockstoff-
Falle dieser Art zu schaffen, die bei leichter Bedienung
einfach und preisgünstig industriell gefertigt werden kann,
dabei wartungsarm und auch nach längerer Einsatzdauer noch
voll funktionsfähig ist sowie insgesamt hohe Fangquoten
ermöglicht.

Diese Aufgabe wird nach der Erfindung dadurch gelöst, daß
der Plattenkörpers als paarweise einander gegenüberliegende
Breit- und Schmalseiten umfassender Flachtrichter mit einem
sich zum Auffangbehälter hin verjüngenden, in dessen oberseitige Öffnung einmündenden unteren Endbereich ausgebildet
ist und die Breitseiten des Flachtrichters mit sich im
wesentlichen über ihre gesamte Breite erstreckenden ununterbrochenen Wandschlitzen versehen sind, die unterseitig von
schräg nach außen und oben abgewinkelten, ihrerseits ununterbrochenen Leit- und Fanglaschen begrenzt sind. Bei dieser Ausgestaltung gewährleistet der Plattenkörper auch im Langzeiteinsatz unter wechselnden Witterungsbedingungen die erforderliche Prallhärte, die zu einem sicheren Abstürzen der aufgeprallten Schädlinge führt. Die Ausbildung des Plattenkörpers als Flachtrichter mit einem geeigneten Hohlprofil bewirkt dabei ein sicheres Einleiten der abstürzenden Schädlinge in den Auffangbehälter, nachdem diese gegen die von den Breitseiten des Flachtrichters dargebotenen Prallflächen geprallt, von den Leit- und Fanglaschen aufgefangen und durch die diesen zugeordneten Wandschlitze in den inneren Hohlraum des Flachtrichters geleitet worden sind. Der Flachtrichter bildet somit erfindungsgemäß den Prallkörpers als Flugbarriere für die Schädlinge und weist zugleich als integralen Bestandteil die Mittel zum Auffangen und Einleiten der abstürzenden Schädlinge bis in den Auffangbehälter auf.

Ein derartiger Flachtrichter, der zweckmäßig einen oberen, in Ansicht rechteckigen und einen unteren, in Ansicht trapezförmigen Bereich umfassen kann, ist einfach und preisgünstig herstellbar, indem er vorzugsweise von einem Kunststoff-Formkörper gebildet ist, der aus zwei miteinander verriegelten, jeweils eine der Breitseiten umfassenden Trichterhälften zusammengesetzt ist. Die Verriegelung der beiden Trichterhälften kann mit geringem Aufwand mit Hilfe von Nut- und Federverbindungen und Schnellverschlüssen erfolgen. Die erfindungsgemäße Lockstoff-Falle stellt dabei eine kompakte Einheit dar und vermeidet eine Vielzahl von Einzelteilen, so daß sie insgesamt wartungsarm und auch nach längerer Einsatzdauer noch voll funktionsfähig ist.

Für die hohen Fangquoten, die mittels der erfindungsgemäßen Lockstoff-Falle erzielbar sind, sind neben den starren Plattenwänden des Flachtrichters, gegen die die Schädlinge im Flug gegenprallen und abstürzen, die sich praktisch über die gesamte Breite der Breitseiten des Flachtrichters erstreckenden, ununterbrochenen Leit- und Fanglaschen in
Verbindung mit den zugehörigen Wandschlitzen ursächlich,
die ein sicheres Einleiten der abstürzenden Schädlinge
in den inneren Hohlraum des Flachtrichters gewährleisten.
Die durchgehenden Leit- und Fanglaschen erhöhen dabei zusätzlich die Steifigkeit der Fangtrichterwände.

Als besonders vorteilhaft hat sich in diesem Zusammenhang
erwiesen, die Wandschlitze mit ihren Leit- und Fanglaschen
in kurzen vertikalen Abständen von etwa 60 bis 90 mm, vorzugsweise etwa 75 mm, untereinander anzuordnen. Die in dieser
Weise geschaffenen kurzen Fällstrecken für einen jeweils
oberhalb einer Leit- und Fanglasche aufgeprallten Schädling
erhöhen die Fangsicherheit, indem längere Fallwege vermieden sind, die zu einem Abtreiben, insbesondere unter
Windeinfluß, oder auch zu einem Wegfliegen der Schädlinge
bei schwacher oder nachlassender Aufprallwirkung führen
können.

In weiterer Ausgestaltung der Erfindung umfaßt der Flachtrichter einen unteren Auslaufstutzen, der in den Auffangbehälter, dessen Öffnungsebene durchdringend, eintaucht
und lösbar mit dem oberen Endbereich des Auffangbehälters
verbunden ist. Diese Ausgestaltung gewährleistet, daß die
im Auffangbehälter gefangenen Schädlinge, insbesondere
Borkenkäfer, nicht mehr aus dem Behälter entweichen können,
dessen lösbare Verbindung mit dem Flachtrichter außerdem
ein einfaches Entleeren des Behälters von gefangenen Schädlingen
gewährleistet.

Schließlich ist der Flachtrichter vorteilhaft an seiner
Oberseite von einem Deckel verschlossen, der aus zwei in
ihrer gesamten Länge aufklappbaren Deckelhälften besteht.
Dies ermöglicht eine einfache, vom Deckel unbehinderte Anbringung des Lockstoffes im Inneren des Flachtrichters und
läßt außerdem eine bequeme Reinigung des Trichterinneren im
Bedarfsfalle zu.

Weitere Merkmale und Vorteile der Erfindung ergeben sich aus den weiteren Unteransprüchen und der nachstehenden Beschreibung in Verbindung mit der Zeichnung, in der ein Ausführungsbeispiel des Gegenstands der Erfindung schematisch veranschaulicht ist. In der Zeichnung zeigen:

Fig. 1          eine perspektivische Darstellung einer Lockstoff-Falle für fliegende Forstschädlinge,
                insbesondere Borkenkäfer,

Fig.2 u.3       je eine vergrößerte Einzelheit der Lockstoff-
                Falle nach Fig. 1 in einem Querschnitt und

Fig.4           eine Ansicht der Lockstoff-Falle nach Fig. 1
                im Gebrauchszustand.

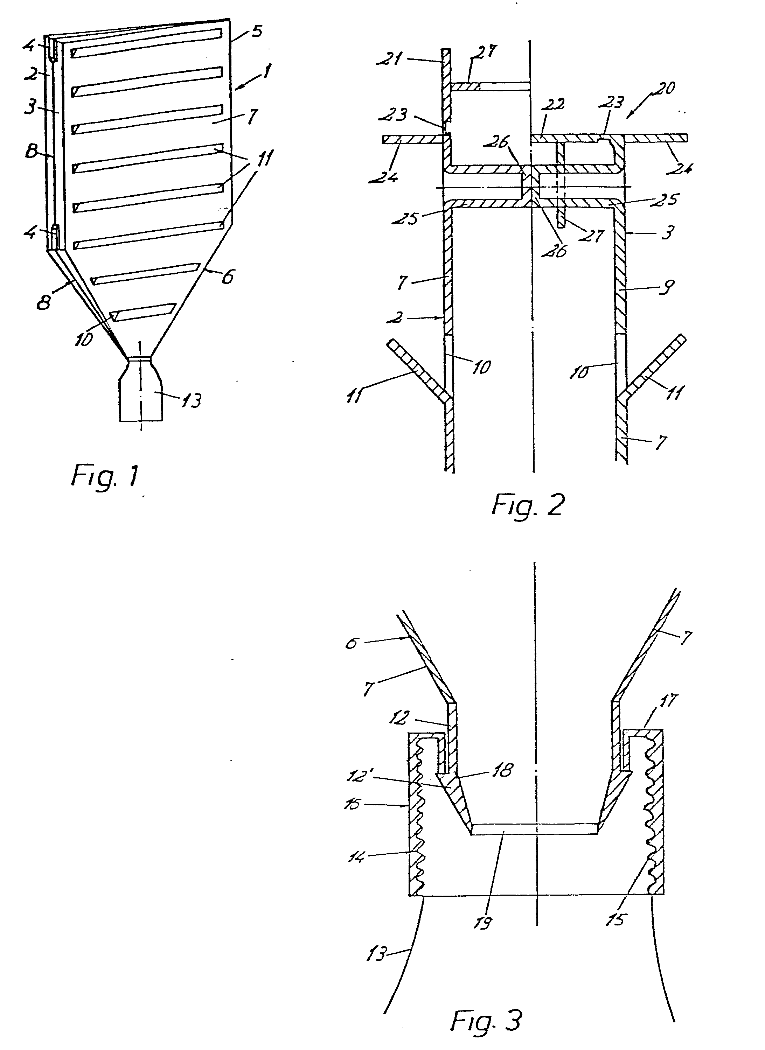

Die in der Zeichnung dargestellte Lockstoff-Falle umfaßt als wesentlichen Bestandteil einen als ganzes mit 1 bezeichneten Flachtrichter, der aus einem starren Plattenkörper besteht. Der Flachtrichter 1 ist dabei von einem Kunststoff-Formkörper gebildet, der aus zwei miteinander verriegelten Trichterhälften 2 und 3 zusammengesetzt ist. Der feste gegenseite Zusammenschluß der Trichterhälften 2 und 3 erfolgt mittels Nut- und Federverbindungen, die an den Trichterhälften ausgebildet sind, und mit Hilfe von an sich bekannten Schnellverschlüssen 4, die an geeigneten Stellen vorgesehen sind und von denen in Fig. 1 zwei zur Darstellung kommen.

Der Flachtrichter 1 umfaßt bei dem dargestellten bevorzugten Ausführungsbeispiel einen oberen, in Ansicht rechteckigen Bereich 5 und einen unteren, in Ansicht trapezförmigen Bereich 6. In beiden Trichterbereichen 5 und 6 liegen sich Breitseiten 7 und Schmalseiten 8,8' paarweise gegenüber, die von den Trichterhälften 2 und 3 in deren vereinigtem Zustand gemeinsam gebildet sind. Die Breitseiten 7 und die Schmalseiten 8,8' sind dabei von den Trichterwänden definiert, die einen inneren Hohlraum 9 des Flachtrichters 1 begrenzen. Der Hohlraum 9 hat einen rechteckigen Querschnitt, der im Trichterbereich 6 entsprechend der Schräge der Schmalseiten 8'

fortschreitend kleiner wird.

Die einander gegenüberliegenden Breitseiten 7 des Flachtrichters 1 sind mit sich im wesentlichen über ihre gesamte
Breite erstreckenden, ununterbrochenen Wandschlitzen 10
versehen, die sowohl im rechteckigen Trichterbereich 5 als
auch im trapezförmigen Trichterbereich 6 ausgebildet sind.
Die Wandschlitze 10 sind unterseitig von schräg nach außen
und oben, vorzugsweise im einen Winkel von 45°, abgewinkelten
Leit- und Fanglaschen 11 begrenzt, die ihrerseits ununterbrochen entlang der Unterseite der Wandschlitze 10 verlaufen.
Die Wandschlitze 10 sind mit ihren Leit- und Fanglaschen 11
in kurzen vertikalen Abständen von etwa 60 bis 90 mm, vorzugsweise etwa 75 mm, untereinander angeordnet. Die schräggestellten Leit- und Fanglaschen 11 bilden zum Trichterinneren 9 hin geneigte Leit- und Fangwände nach Art von
Trichterwänden, die eine sichere Einleitung von Schädlingen,
die oberhalb einer Leit- und Fanglasche 11 auf eine Breitseite 7 des Flachtrichters 1 aufgeprallt sind und abstürzen,
in den Trichterhohlraum 9 gewährleisten. In diesem Zusammenhang hat sich eine Querschnittslänge der Leit- und Fanglaschen
11 von etwa 15 bis 20 mm und eine Höhe der Wandschlitze 10
von etwa 10 bis 15 mm als zweckmäßig erwiesen.

Der untere, trapezförmige Trichterbereich 6 geht in einen
unten offenen Auslaufstutzen 12 über, der in einen Auffangbehälter 13 eintaucht, in dem die durch die Leit- und Fanglaschen 11 und die Wandschlitze 10 in den Trichterhohlraum 9
eingeleiteten und durch den sich nach unten mit seinen
Schmalseiten 8' verjüngenden Trichterbereich 6 sowie den
Auslaufstutzen 12 eingeführten abgestürzten Schädlinge gesammelt werden. Der Auslaufstutzen 12 durchdringt dabei die
obere Öffnungsebene des Auffangbehälters 13 und ist mit
diesem lösbar verbunden.

Zu diesem Zweck ist der flaschenförmig ausgebildete Auffangbehälter 13 mit einem oberen Gewindehals 14 versehen, der

- 6 -

0144994

eine starke Gewindeprofilierung 15 nach Art eines Rundgewindes mit deutlich ausgeprägten Gewinderillen aufweist.
Auf den Gewindehals 14 ist eine Abschlußkappe 16 aufgeschraubt, die mit einem der Gewindeprofilierung 15 des
Auffangbehälters 13 entsprechenden Innengewinde versehen
ist. In ihrer Stirnwand 17 weist die Abschlußkappe 16 eine
mittlere Öffnung 18 auf, die dem Umfang des Auslaufstutzens
12 angepaßt ist und in der der Auslaufstutzen 12 mittels einer
an diesem angeformten Schulter 12' mit Rasteingriff festgelegt ist.

Den unteren Abschluß des Auffangbehälters 13 bildet vorteilhaft ein Siebboden, der aus nichtrostendem Stahl bestehen kann. Auf diese Weise kann in den Flachtrichter 1
durch die Wandschlitze 10 eindringendes Regenwasser ablaufen. Die Sieböffnungen sind dabei jedoch so klein gehalten, daß die eingefangenen Schädlinge nicht entweichen
können. Auch ein Entweichen der Schädlinge aus dem oberen
Ende des Auffangbehälters 13 ist nicht möglich, da zum einen
die Gewindeprofilierung 15 des Gewindehalses 16 von den
Schädlingen bzw. Käfern schwerlich überwunden werden kann
und zum anderen der Auslaufstutzen 12 ein Stück in das
Innere des Behälters 13 hineinragt. Hinzu kommt, daß der
Auslaufstutzen 12, wie aus Fig. 3 ersichtlich, einen scharfkantigen Öffnungsrand 19 aufweist, der insbesondere von
Borkenkäfern, die ein steifes Rückgrat haben, nicht überwunden werden kann. Die gefangenen Schädlinge werden somit zwar glatt und widerstandslos in den Auffangbehälter 13
eingeführt, wobei jedoch zugleich am oberen Ende des Auffangbehälters 13 eine für ein Entweichen der gefangenen
Schädlinge unüberwindbare Sperre gebildet ist.

Oberseitig ist der Flachtrichter 1 von einem Deckel 20
(Fig.2) verschlossen. Der Deckel 20 besteht aus zwei jeweils
einstückig mit den Trichterhälften 2 und 3 geformten Deckelhälften 21 und 22, die durch ein von einer Materialverdünnung
gebildetes Scharnier 23 mit den Trichterhälften 2,3, d.h.
den die Breitseiten 7 definierenden Trichterwänden, ebenso wie
zwei seitliche, die Breitseiten 7 überragende Dachleisten 24, verbunden sind.

Als Mittel zur gegenseitigen Vereinigung der Trichterhälften 2 und 3 sind bei dem Ausführungsbeispiel nach Fig. 2 in Abständen über die Breitseitenwände 7 verteilt, etwa entlang ihrem oberen und ihrem unteren Endbereich einander gegenüberliegende zylindrische Hülsen 25 in der Trichterhälften 2, 3 ausgebildet, die mit ihren Böden 26 aneinanderliegen, wobei die aneinanderliegenden Hülsenböden 26 miteinander verschraubt sind.

Die beiden Deckelhälften 21 und 22 sind mittels ihrer Scharniere 23 in ihrer gesamten Länge aufklappbar, wie es in Fig. 2 für die Deckelhälfte 21 gezeigt ist. Die Deckelhälfte 22 ist in Fig. 2 im geschlossenen Zustand gezeigt, in dem die Deckelhälften 21,22 jeweils mit dem von den Trichterhälften 2 und 3 gebildeten Trichtergehäuse verriegelt sind. Hierzu besitzen die Deckelhälften 21 und 22 an ihrer Unterseite Verriegelungsbügel 27 in Gegenüberlage zu den Hülsen 25, die sie im heruntergeklappten Zustand der Deckelhälften 21,22 zur Herstellung eines federnden Verriegelungseingriffs klemmend übergreifen.

Bei voll aufgeklappten Deckelhälften 21 und 22 ist auf einfache Weise eine Befestigung des Lockstoffes, üblicherweise in Form eines Lockstoff-Beutels, im Trichterinneren 9 möglich, indem beispielsweise der Lockstoff-Beutel an einer mittleren Hülsenausbildung 25,25 festgebunden wird. In den Schmal- seiten 8,8' des Flachtrichters 1 sind Belüftungsschlitze (nicht dargestellt) angebracht, die ein gleichmäßiges Ausströmen des Lockstoffes aus dem Trichterinneren 9 heraus begünstigen.

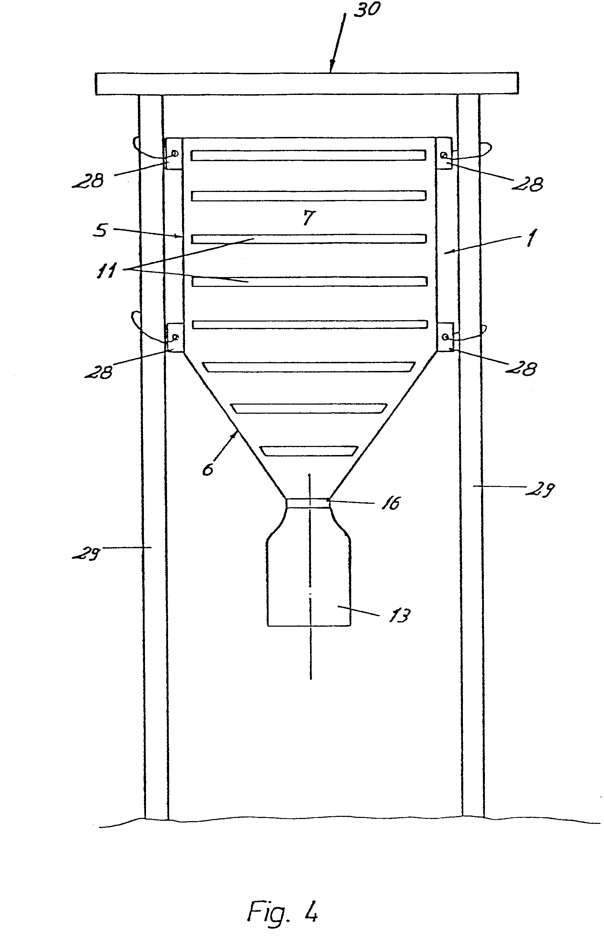

In Fig. 4 ist die Lockstoff-Falle im praktischen Einsatz gezeigt, wie sie in Waldgebieten zur Schädlingsbekämpfung, insbesondere zur Bekämpfung von Borkenkäfern, verwendet wird. Die Lockstoff-Falle ist dabei mittels seitlicher Ösen, die an den Ecken des rechteckigen Trichterbereichs 5 angebracht bzw. angeformt sind, an senkrechten Streben 29 einer Halterung 30 in geeigneter Höhe über dem Boden angebunden.

Schutzansprüche:

1. Lockstoff-Falle für fliegende Forstschädlinge, insbesondere Borkenkäfer, bestehend aus einer in aufrechter Stellung angeordneten Flugbarriere in Form eines starren Plattenkörpers für anfliegende Schädlinge und einem unter diesem angeordneten, eine oberseitige Öffnung aufweisenden Auffangbehälter für nach Aufprallen auf dem Plattenkörper abstürzende Schädlinge, dadurch gekennzeichnet, daß der Plattenkörper als paarweise einander gegenüberliegende Breitseiten (7) und Schmalseiten (8,8') umfassender Flachtrichter (1) mit einem sich zum Auffangbehälter (13) hin verjüngenden, in dessen oberseitige Öffnung einmündenden unteren Endbereich (6,12) ausgebildet ist und die Breitseiten (7) des Flachtrichters (1) mit sich im wesentlichen über ihre gesamte Breite erstreckenden, ununterbrochenen Wandschlitzen (10) versehen sind, die unterseitig von schräg nach außen und oben abgewinkelten, ihrerseits ununterbrochenen Leit- und Fanglaschen (11) begrenzt sind.

2. Lockstoff-Falle nach Anspruch 1, dadurch gekennzeichnet, daß der Flachtrichter (1) einen oberen, in Ansicht rechteckigen Bereich (5) und einen unteren, in Ansicht trapezförmigen Bereich (6) umfaßt.

3. Lockstoff-Falle nach Anspruch 1 oder 2, dadurch gekennzeichnet, daß der Flachtrichter (1) von einem Kunststoff-Formkörper gebildet ist, der aus zwei miteinander verriegelten, jeweils eine der Breitseiten (7) umfassenden Trichterhälften (2,3) zusammengesetzt ist.

4. Lockstoff-Falle nach einem der Ansprüche 1 bis 3, dadurch gekennzeichnet, daß die Wandschlitze (10) mit ihren Leit- und Fanglaschen (11) in kurzen vertikalen Abständen untereinander angeordnet sind.

5. Lockstoff-Falle nach einem der Ansprüche 1 bis 4, dadurch gekennzeichnet, daß der vertikale Abstand zwischen zwei benachbarten Wandschlitzen (10) und ihren Leit- und Fanglaschen (11) etwa 60 bis 90 mm beträgt.

6. Lockstoff-Falle nach einem der Ansprüche 1 bis 5, dadurch gekennzeichnet, daß die Leit- und Fanglaschen (11) in einem Winkel von etwa 45° zur angrenzenden Wandfläche (7) schräggestellt sind.

7. Lockstoff-Falle nach einem der Ansprüche 1 bis 6, dadurch gekennzeichnet, daß der Flachtrichter (1) einen unteren Auslaufstutzen (12) umfaßt, der in den Auffangbehälter (13), dessen Öffnungsebene durchdringend, eintaucht und lösbar mit dem oberen Endbereich des Auffangbehälters (13) verbunden ist.

8. Lockstoff-Falle nach einem der Ansprüche 1 bis 7, dadurch gekennzeichnet, daß der Auffangbehälter (13) flaschenförmig mit einem oberen, eine starke Gewindeprofilierung (15) aufweisenden Gewindehals (14) ausgebildet und der Auslaufstutzen (12) des Flachtrichters (1) mit dem Auffangbehälter (13) durch eine auf den Gewindehals (14) aufgeschraubte Abschlußkappe (16) verbunden ist, die eine mittlere Öffnung (18) in ihrer Stirnwand 17. aufweist, in der der Auslaufstutzen (12) mit Klemmeingriff festgelegt ist.

9. Lockstoff-Falle nach Anspruch 7 oder 8, dadurch gekennzeichnet, daß der Auslaufstutzen (12) einen scharfkantigen

Öffnungsrand (19) aufweist.

10. Lockstoff-Falle nach einem der Ansprüche 1 bis 9, dadurch gekennzeichnet, daß der Flachtrichter (1) oberseitig von einem Deckel (20) verschlossen ist, der aus zwei in ihrer gesamten Länge aufklappbaren Deckelhälften (21,22) besteht.

Fig. 1

Fig. 2

Fig. 3

Fig. 4